# EUROPEAN PATENT SPECIFICATION

(11) **EP 3 538 984 B1**
(45) Date of publication and mention of the grant of the patent: **18.05.2022**
(21) Application number: 17869770.2
(22) Date of filing: 26.09.2017
(51) Int. Cl.: G06F 3/06, G06F 12/02, G06F 21/60, G06F 21/88

(54) **METHOD IN DATA WIPING OF A MASS STORAGE**
VERFAHREN ZUM DATENLÖSCHEN EINES MASSENSPEICHERS
PROCÉDÉ DE PURGE DE DONNÉES D'UN DISPOSITIF DE STOCKAGE DE MASSE

(30) Priority: 09.11.2016 FI 20165842
(43) Date of publication of application: 18.09.2019
(73) Proprietor: Jetico Inc. Oy, 02150 Espoo (FI)
(72) Inventor: PICHUEV, Alexander, Novosibirsk 630058 (RU)
(74) Representative: Kangasmäki, Reijo Holger
(86) International application number: PCT/FI2017/050672
(87) International publication number: WO 2018/087421

(56) References cited:
- GB-A- 2 490 991
- US-A1- 2010 174 865
- US-A1- 2010 257 331
- US-A1- 2012 284 587
- US-A1- 2014 223 075
- US-A1- 2015 256 521
- US-A1- 2015 278 088
- US-B1- 7 275 139

## Description

The invention relates to a method in data wiping of a mass storage according to claim 1 directed thereto. The invention is particularly meant to make more efficient the data wiping process of large size mass storages.

Below are first of all explanations for some essential terms related to the present invention:
Mass storage - In computing it refers to the storage of large amounts of data in a persisting and machine-readable fashion. Devices and/or systems that have been described as mass storage include tape libraries, RAID systems, and a variety of computer drives, such as hard disk drives, magnetic tape drives, magneto-optical disc drives, optical disc drives, memory cards and solid-state drives. It also includes experimental forms like holographic memory. Mass storage includes devices with removable and non-removable media. It does not include random access memory (RAM).

A solid-state drive (SSD), also known as a solid-state disk - a solid-state storage device that uses integrated circuit assemblies as memory to store data persistently. SSD technology primarily uses electronic interfaces compatible with traditional block input/output (I/O) hard disk drives (HDDs), which permit simple replacements in common applications. Additionally, new I/O interfaces, like SATA Express and M.2, have been designed to address specific requirements of the SSD technology.

SSDs have no moving mechanical components. This distinguishes them from traditional electromechanical magnetic disks, such as hard disk drives (HDDs) or floppy disks, which contain spinning disks and movable read/write heads. Compared with electromechanical disks, SSDs are typically more resistant to physical shock, run silently, have lower access time, and lower latency. However, while the price of SSDs has continued to decline over time, consumer-grade SSDs are still roughly four times more expensive per unit of storage than consumer-grade HDDs.

Operating System - a set of software components that manages computer hardware and software resources and provides common services for computer programs.

File - a piece of information with its own name.

File system - the structure and logic rules used to manage the files and their names. File system is used to control how data is stored and retrieved.

'Delete' command - a command provided by the Operating System to delete a file/folder or a group of files/folders. The command does not erase contents of the file from the disk, it only modifies
file system tables to mark disk sectors where the file was stored as 'free'.

Data wiping (also called data clearing or secure data erasure) - a software-based method of overwriting data in order to completely destroy all electronic data residing in an unallocated free disk space of a hard disk drive or other digital media. Permanent data erasure goes beyond basic file deletion commands, which only remove direct pointers to the data disk sectors and make the data recovery possible with common software tools.

Wipe Free Space process - a process to overwrite an entire disk space that is not allocated by files. The process aims to secure erase files that were deleted earlier with regular 'Delete' command. The process is applied to hard drives, SSD drives, removable media, network storage devices. As the process needs to allocate an entire free disk space, it is time-consuming and resource-consuming process.

Dirty disk space - disk areas that contain users' data that was deleted with standard 'Delete' command.

Clean (wiped) disk space - disk areas that were overwritten(wiped) with some wiping standard and do not contain any user data.

Wear leveling - a technique for prolonging the service life of some kinds of erasable computer storage media, such as flash memory, which is used in solid-state drives (SSDs) and USB flash drives, and phase change memory.

Disk Cleanup (cleanmgr.exe) - a computer maintenance utility included in Microsoft Windows designed to free up disk space on a computer's hard drive. The utility first searches and analyzes the hard drive for files that are no longer of any use, and then removes the unnecessary files. There are a number of different file categories that Disk Cleanup targets when performing the initial disk analysis.

Because of security reasons in many cases it is required to erase contents of earlier deleted files. If the 'Wipe Free Space' process is not run in time, the risk of data leak arises. It means that the 'Wipe Free Space' process must be performed regularly.

On modern large disks e.g. with terabytes of disk space, the 'Wipe Free Space' process may take several days to complete. Besides, it is also resource-consuming process, i.e. it impacts system performance and prevents users from normal working.

When a normal 'Wipe Free Space' process is running, it allocates the free space without any preliminary checks. So it wipes also the disk space that has been already wiped during a previous wipe session, which is actually a waste of time, because the space is clean and there is not any need to wipe it again.

Patent application US 2010/174865 A1 discloses a method in data wiping of a mass storage in order to erase mass volumes of data by destroying electronic data from IT assets, computer devices, servers, data storage environments, network storage devices, removable data storage media and/or the like, wherein the data wiping is being performed in a software-based manner by erasing data residing on a computer readable media, such a as hard disk drive, a magnetic tape drive, a magneto-optical disc drive, an optical disc drive, a memory card, a solid-state drive and/or the like digital media, wherein a Wipe Free Space process is being exploited that overwrites unallocated free disk space on the computer readable media with temporary data, with which all dirty disk space on the computer readable media is being filled according to a wiping scheme, whereafter dirty disk space is being erased by deleting the temporary data thereon. In this context, a number of temporary files is being created that occupy all the dirty disk space, whereafter a wiping pattern and/or random data is being created to the temporary files in order to overwrite all the dirty disk space and thus to erase all previous data content thereof. In the data wiping of the computer readable media, a Data wiping software is being applied by means of which the temporary files are being deleted and saved as a Wiped free -space, wherein the temporary files are being kept in existence in a Wiped and Reserved -space under management of the Data wiping software.

It is the aim of the present invention to achieve decisive improvement in the problems described above and thus to raise essentially the level of prior art regarding problems due to unsatisfactory efficiency of a wiping process of large size mass storages. In order to achieve this aim, the method according to the present invention is mainly characterized by what has been defined in the characterizing part of the independent claim directed thereto.

As the most important advantages of the method according to the invention may be mentioned simplicity and efficiency of the operating principle of the method and the software applicable for the same, thanks to which the data wiping of a large size mass storages can be performed with simple enough measures by any user without a need for special expertise in IT-technology. When applying the method, the user only needs to install a Data wiping software according to the invention to his/her computer, whereafter the method is being carried out automatically all of its own.

A Reserved Space functionality according to the present invention saves the time by preserving the wiped space in clean state. As soon as the Reserved Space functionality is installed and initiated on a mass storage, next time when e.g. a Wipe Free Space process is running, it will recognize the clean space and won't wipe it.

The Reserved Space principle can be used for any disk, but its benefit especially clearly appears on large disks, because of huge gain in time, and on SSD flash disks, because on these disks there is no other way to wipe a file properly except running a Wipe Free Space program.

The inventiveness of the Reserved Space principle according to the invention is based on the following:
a) the idea of decreasing the time required for the 'Wipe Free Space' process, i.e. the time when a user is prevented from normal working,
b) making the optimization without loss in security,
c) the disk space management is automated and does not require user's attention, and
d) the Reserved Space feature is specifically implemented so that it does not negate 'Wear leveling' technique supported by SSD drives to prolong the lifetime.

Secure File Erasing particularly regarding SSD disks, differ from the same for conventional Hard Disk Drives by featuring a wear-leveling function which performs copy/cache of information evenly around the drive.

Since it is not possible to guarantee that new data overwrites the old data in the same place, present data wiping tools cannot be 100% effective on SSD disks when wiping files/folders. The recommended way to wipe a file on SSD disks is to delete the file and then to run 'Wipe Free Space' procedure that takes a long time.

The above is due to the fact that a normal 'Wipe Free Space' procedure allocates free disk space temporarily and overwrites it according to a wiping scheme. Then the process deletes the temporary files, wherein as a result, the disk has the same amount of free space as before.

When 'Reserved Space' feature according to the invention is enabled, some temporary files are not deleted after wiping. So, the wiped space is still considered as 'allocated' and it won't be used, so it won't become 'dirty' and it won't need wiping. Only a small part of wiped space is unallocated, i.e. becomes 'free'. Next time when 'Wipe Free Space' operation is running, it will wipe only this small part.

Other advantageous embodiments of the method according to the invention have been presented in the dependent claims directed thereto.

In the following description the invention is depicted in detail with reference to the appended drawings, in which:
In figure 1a
   is shown the principle of initial creating of a Reserved Space area,
In figure 1b
   is shown the principle of deleting a file followed by a "wipe free space" on a disk with a reserved space principle according to the invention enabled, and
In figure 2
   is shown a general operating principle of the method according to the invention.

The invention relates to a method according to claim 1.

As an advantageous embodiment of the method according to the invention, in case the Reserved Space feature is being enabled and a Threshold value preset, after a successfully accomplished wiping procedure the amount of free space is automatically being set by the Reserved Space residential feature of the Data wiping software to be equal to the preset Threshold value and the rest of newly wiped space is being added to the Wiped and Reserved -space,being preserved in clean state.

As an advantageous embodiment of the method according to the invention, in case a Wear leveling technique is applied in the computer readable media, after a subsequent wiping procedure and, when a new portion of the Wiped space has been added to the Wiped and Reserved -space, an old portion of the the same is being freed to keep all parts of the computer readable media in use, in order to avoid using and reserving continuously the same disk sectors.

As an advantageous embodiment of the method according to the invention, particularly in wiping an SSD drive, a large file is being allocated by the Data wiping software so that this file occupies an adequately large space of free space on the SSD disk as a Reserved Space File, wherein, when the user deletes a file on the SSD drive, all free space that is left after creating the Reserved Space File is being wiped by the the Reserved Space residential feature. This results in that the contents of the just deleted file becomes erased (since all free space has been erased), wherafter location of the Reserved Space File on the SSD drive is being changed by the Data wiping software, and the next time, when another file will be deleted, another portion of free space will be wiped in order not to harm the Wear leveling feature of the SSD drive thanks to in every wiping procedure, different portions of the drive are being erased.

As further advantageous embodiment of the method according to the invention, in automatization of the disk space management, the amount of free space on the disk where the Reserved Space feature is enabled is being continuously monitored by a Background feature of the Data wiping software, wherein, in case the system or an application allocates new disk space so that the actual free space becomes lower than the preset Threshold value, the size of the free space is being automatically increased up to the preset Threshold value by reducing the space for the Wiped and Reserved -space. In case the space for the Wiped and Reserved -space becomes empty, the monitoring of the free space by the Data wiping software is being stopped.

As a further advantageous embodiment of the method according to the invention, a reminder and/or an indication of disk space pollution is being generated by the Backround feature in case the freed space size after a wiping procedure becomes larger than a preset proportion thereof to the size of the computer readable media, in order to provide the user with a Disk Cleanup recommendation or the like.

As a further advantageous embodiment of the method according to the invention, an option to set the value for the Threshold feature and/or for the proportion of the freed space after an accomplished wiping procedure to the size of the computer readable media is being provided to the user by the Reserved Space residential feature.

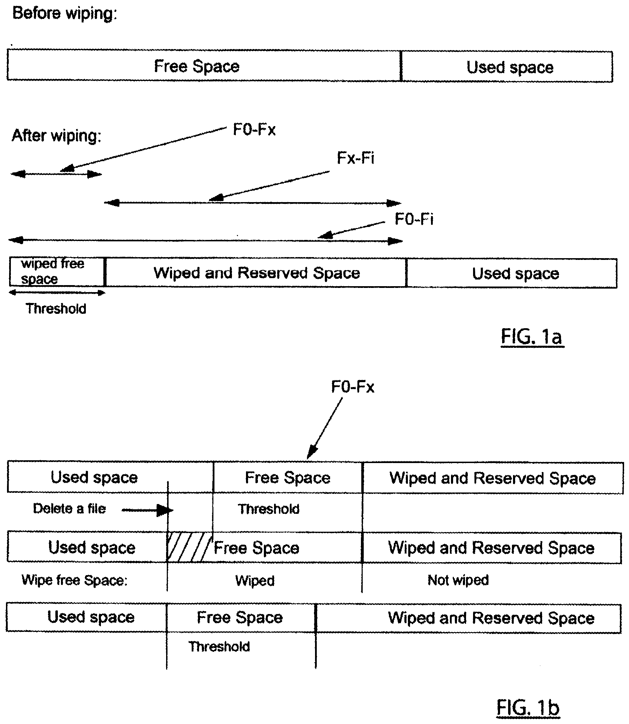

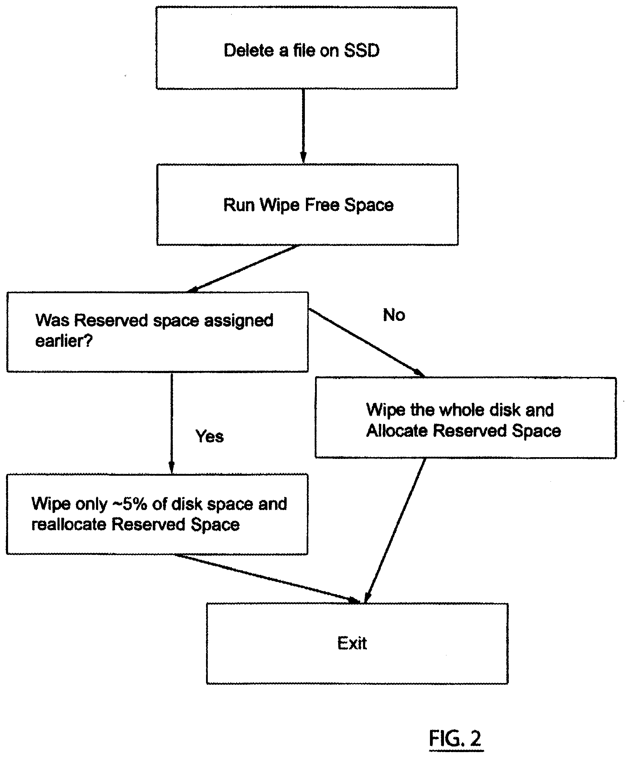

In practice, the procedure according to the present invention for a secure deleting of a file with a final erasing thereof particularly from an SSD disk takes place with reference to the diagrams shown in figures 1a, 1b, and 2 as follows:
1) The user turns on the Reserved Space feature of the Data wiping software installed on a disk;
2) The software wipes all available free space on the disk.
3) The program allocates a large file that occupies *almost* all (for example, 90%) of the free space on the disk. This large file is named e.g. as *Reserved Space File.*
4) When the user deletes a file on the SSD disk, the residential feature of the software wipes all free space that is left after creating the *Reserved Space File.*
5). As result, contents of the just deleted file becomes erased, since all free space was erased.
6). The program changes location of the *Reserved Space File* on the disk. Next time when another file will be deleted, another portion of free space will be wiped. Hence, *Wear Leveling* feature of the SSD disk will not be harmed, because every time different portions of the disk will be erased.

The sizes of the Wiped free and Wiped and Reserved - spaces are maintained automatically. The user just assigns a value for the Threshold, that is the size of disk space that remains 'free' after wiping. The Reserved Space feature will ensure that the disk never has lower free space than the preset Threshold value.

If the Reserved Space feature is enabled and a Threshold value is assigned by the user, every time the Wipe Free Space procedure is successfully completed, the amount of free space is set to be equal to the assigned Threshold value. The rest of newly wiped space is added to the Wiped and Reserved -space, which is a disk space that is reserved in clean state.

The Wear leveling technique is taken into account so that after a second and subsequent wiping, when a new portion of the Wiped and Reserved -space has been added to the same, an old portion of the Wiped and Reserved - space is freed. This is done to make all parts of disk work, to avoid using and reserving the same disk sectors for a long time.

Automatization of the disk space management is carried out by the special Background feature that continuously monitors the amount of free space on the disk where the Reserved Space feature is enabled. If the system or an application allocates a new disk space so that the actual free space becomes lower than the Threshold value, the Data wiping software automatically increases size of free space up to the Threshold value by reducing the reserved portion. If the reserved portion on the disk becomes empty, then software stops monitoring free space on the disk.

The same Background feature can be used as a reminder, or indicator of disk space pollution. If the free space size becomes large exceeding a preset proportion, for example 10% to the disk size, which means that many files were deleted since last wiping process and it is time to run a disk cleaning again.

The Reserved Space residual feature being carried out e.g. as a 'Reserved Space Manager' utility allows the users to enable/disable the feature and to set a value for the Threshold and also to the proportion limit for the free space in respect with the total size of the disk.

## Claims

1. A method for data wiping on a mass storage in order to erase mass volumes of data by destroying electronic data from IT assets, computer devices, servers, data storage environments, network storage devices, removable data storage media and/or the like, wherein the data wiping is being performed in a software-based manner by erasing data residing on a computer readable media, such a as hard disk drive, a magnetic tape drive, a magneto-optical disc drive, an optical disc drive, a memory card, a solid-state drive and/or the like digital media, wherein a Wipe Free Space process, in order to overwrite an entire disk space that is not allocated by files, is being exploited by overwriting unallocated free disk space on the computer readable media with temporary data, by which all dirty disk space on the computer readable media is being filled according to a wiping scheme by allocating free disk space temporarily and overwriting it, whereafter the dirty disk space is being erased by deleting the temporary data thereon, wherein as a result, the disk has the same amount of free space as before, and wherein in the Data wiping of the computer readable media, a number of temporary files (F0-Fi) are being created that occupy all the dirty disk space, whereafter a wiping pattern and/or random data is being created to the temporary files in order to overwrite all the dirty disk space and thus to erase all previous data content thereof,
**characterized in that**,
in the wiping of the computer readable media, a Data wiping software for overwriting data in order to completely destroy all electronic data residing in an unallocated free disk space is being applied with a Reserved Space feature, by means of which only a part (FO-Fx) of the temporary files (FO-Fi) is being deleted and saved as a Wiped free -space, wherein the rest (Fx-Fi) of the temporary files are being kept in existence in a Wiped and Reserved -space under management of the Reserved Space residential feature of the Data wiping software, wherein the Wiped and Reserved - space is still considered as allocated and it won't be used, and wherein the sizes of the Wiped free -space and the Wiped and Reserved - space are being maintained as desired, by utilizing a Threshold feature of the Data wiping software in order to manage the size of disk space that remains free after the wiping procedure, for use under control of the Reserved Space residential feature, by means of which it is being ensured that the computer readable media does not have less free space than a preset Threshold value.

2. The method according to claim 1, wherein, in case the Reserved Space feature is being enabled and a threshold value is preset, after a successfully accomplished wiping procedure, the amount of free space is automatically being set by the Reserved Space residential feature of the Data wiping software to be equal to the preset Threshold value and the rest of newly wiped space is being added to the Wiped and Reserved -space, being preserved in clean state.

3. The method according to claim 1 or 2, wherein, in case a Wear leveling technique is applied in the computer readable media, after a subsequent wiping procedure and, when a new portion of the Wiped and Reserved -space has been added to the same, an old portion of the Wiped and Reserved -space is being freed to keep all parts of the computer readable media in use, in order to avoid continuously using and reserving the same disk sectors.

4. The method according to claim 3, wherein in wiping an SSD drive, a large file is being allocated by the Data wiping software, so that this file occupies an adequately large space of free space on the SSD disk as a Reserved Space File, wherein, when the user deletes a file on the SSD drive, all free space that is left after creating the Reserved Space File is being wiped by the the Reserved Space residential feature resulting in that the contents of the just deleted file become erased, wherafter the location of the Reserved Space File on the SSD drive is being changed by the Data wiping software, and a next time, when another file will be deleted, another portion of free space will be wiped in order not to harm the Wear Leveling feature of the SSD drive thanks to the fact that in every wiping procedure, different portions of the drive are being erased.

5. The method according to any of the preceding claims 1-4, wherein in an automatization of the disk space management, the amount of free space on the disk where 'Reserved Space' feature is enabled is being continuously monitored by a Background feature of the Data wiping software, wherein, in case the system or an application allocates new disk space so that the actual free space becomes lower than the preset Threshold value, the size of the free space is being automatically increased up to the Threshold by reducing the space for the Wiped and Reserved -space , and, in case the space for the Wiped and Reserved -space becomes empty, the monitoring of the free space by the Data wiping software is being stopped.

6. The method according to claim 5, wherein a reminder and/or an indication of disk space pollution is being generated by the Backround feature in case the freed space size after a wiping procedure becomes larger that a preset proportion thereof to the size of the computer readable media, in order to provide the user with a Disk Cleanup recommendation or the like.

7. The method according to claim 1, 2, 5 or 6, wherein an option to set the value for the Threshold feature and/or for the proportion of the freed space after an accomplished wiping procedure to the size of the computer readable media is being provided to the user by the Reserved Space residential feature.

## Patentansprüche

1. Verfahren zum Datenlöschen eines Massenspeichers, um große Datenmengen zu löschen, indem elektronische Daten von IT-Anlagen, Computergeräten, Servern, Datenspeicherumgebungen, Netzwerkspeichergeräten, entfernbaren Datenspeichermedien und/oder dergleichen zerstört werden, wobei die Datenlöschung auf softwarebasierte Weise durchgeführt wird, indem Daten, die sich auf einem computerlesbaren Medium befinden, wie z.B. einem Festplattenlaufwerk, einem Magnetbandlaufwerk, einem magneto-optischen Laufwerk, einem optischen Laufwerk, einer Speicherkarte, einem Solid-State-Laufwerk und/oder einem ähnlichen digitalen Medium, gelöscht werden, wobei ein Bereinigungsprozess zum Überschreiben des gesamten, nicht durch Dateien belegten Speicherplatzes genutzt wird, indem nicht belegter freier Speicherplatz auf dem computerlesbaren Medium mit temporären Daten überschrieben wird, wobei der gesamte verschmutzte Speicherplatz auf dem computerlesbaren Medium nach einem Löschschema gefüllt wird, indem freier Speicherplatz vorübergehend zugewiesen und überschrieben wird, woraufhin der verschmutzte Speicherplatz durch Beseitigen der temporären Daten darauf gelöscht wird, wobei die Platte im Ergebnis die gleiche Menge an freiem Platz wie zuvor aufweist, und wobei bei der Datenlöschung des computerlesbaren Mediums eine Anzahl von temporären Dateien (FO-Fi) erzeugt wird, die den gesamten verschmutzten Speicherplatz belegen, woraufhin ein Löschmuster und/oder Zufallsdaten in den temporären Dateien erzeugt werden, um den gesamten verschmutzten Speicherplatz zu überschreiben und somit alle vorherigen Dateninhalte davon zu löschen, **dadurch gekennzeichnet, dass** beim Löschen des computerlesbaren Mediums eine Datenlöschsoftware zum Überschreiben von Daten, um alle elektronischen Daten, die sich an einem nicht zugewiesenen freien Speicherplatz befinden, vollständig zu zerstören, mit einer Funktion für reservierten Speicherplatz angewendet wird, mit der nur ein Teil (FO-Fx) der temporären Dateien (FO-Fi) gelöscht und als bereinigter freier Speicherplatz gespeichert wird, wobei der Rest (Fx-Fi) der temporären Dateien an einem bereinigten und reservierten Speicherplatz unter Verwaltung der Belegungsfunktion für reservierten Speicherplatz der Datenlöschsoftware bestehen bleibt, wobei der bereinigte und reservierte Speicherplatz immer noch als zugewiesen betrachtet und nicht verwendet wird und wobei die Größe des bereinigten freien Speicherplatzes und des bereinigten und reservierten Speicherplatzes wie gewünscht beibehalten wird, indem eine Schwellenwertfunktion der Datenlöschsoftware verwendet wird, um die Größe des Festplattenplatzes, der nach dem Löschvorgang frei bleibt, für die Verwendung unter der Kontrolle der Belegungsfunktion für reservierten Speicherplatz, durch die sichergestellt wird, dass das computerlesbare Medium nicht weniger freien Speicherplatz als einen voreingestellten Schwellenwert hat, zu verwalten.

2. Verfahren nach Anspruch 1, bei dem, falls die Funktion Reservierter Speicherplatz aktiviert und ein Schwellenwert voreingestellt ist, nach einem erfolgreich abgeschlossenen Löschvorgang die Menge an freiem Speicherplatz automatisch durch die Belegungsfunktion für reservierten Speicherplatz der Datenlöschsoftware auf den voreingestellten Schwellenwert eingestellt wird und der Rest des neu gelöschten Speicherplatzes dem bereinigten und reservierten Speicherplatz hinzugefügt wird, wobei er im sauberen Zustand erhalten bleibt.

3. Verfahren nach Anspruch 1 oder 2, wobei im Falle der Anwendung einer Verschleißausgleichstechnik auf das computerlesbare Medium nach einem nachfolgenden Löschvorgang und wenn ein neuer Teil des bereinigten und reservierten Speicherplatzes hinzugefügt wurde, ein alter Teil des bereinigten und reservierten Speicherplatzes freigegeben wird, um alle Teile des computerlesbaren Mediums in Gebrauch zu halten und zu vermeiden, dass ständig dieselben Plattensektoren verwendet und reserviert werden.

4. Verfahren nach Anspruch 3, wobei beim Löschen eines SSD-Laufwerks eine große Datei von der Datenlöschsoftware zugewiesen wird, sodass diese Datei einen ausreichend großen freien Speicherplatz auf der SSD-Platte als Datei mit reserviertem Speicherplatz belegt, wobei, wenn der Benutzer eine Datei auf dem SSD-Laufwerk löscht, der gesamte freie Speicherplatz, der nach dem Erzeugen der Datei mit reserviertem Speicherplatz übrig ist, durch die Belegungsfunktion für reservierten Speicherplatz gelöscht wird, was dazu führt, dass der Inhalt der gerade gelöschten Datei gelöscht wird, woraufhin der Speicherort der Datei mit reserviertem Speicherplatz auf dem SSD-Laufwerk durch die Datenlöschsoftware geändert und beim nächsten Mal, wenn eine andere Datei gelöscht wird, ein anderer Teil des freien Speichers gelöscht wird, um die Verschleißausgleichsfunktion des SSD-Laufwerks nicht zu beeinträchtigen, da bei jedem Löschvorgang verschiedene Teile des Laufwerks gelöscht werden.

5. Verfahren nach einem der vorhergehenden Ansprüche 1 bis 4, wobei bei einer Automatisierung der Speicherplatzverwaltung die Menge an freiem Speicherplatz auf der Festplatte, auf der die Funktion "Reservierter Speicherplatz" aktiviert ist, kontinuierlich durch eine Hintergrundfunktion der Datenlöschsoftware überwacht wird, wobei für den Fall, dass das System oder eine Anwendung neuen Speicherplatz auf der Festplatte zuweist, sodass der tatsächliche freie Speicherplatz kleiner als der voreingestellte Schwellenwert wird, die Größe des freien Speicherplatzes automatisch bis zum Schwellenwert erhöht wird, indem der Platz für den bereinigten und reservierten Speicherplatz reduziert wird, und, falls der Platz für den bereinigten und reservierten Speicherplatz geleert ist, die Überwachung des freien Speicherplatzes durch die Datenlöschsoftware gestoppt wird.

6. Verfahren nach Anspruch 5, wobei eine Erinnerung und/oder ein Hinweis auf die Verschmutzung des Speicherplatzes durch die Hintergrundfunktion erzeugt wird, wenn die Größe des freigegebenen Platzes nach einem Löschvorgang größer wird als ein voreingestelltes Verhältnis zur Größe des computerlesbaren Mediums, um dem Benutzer eine Empfehlung zur Festplattenbereinigung oder dergleichen zu geben.

7. Verfahren nach Anspruch 1, 2, 5 oder 6, wobei dem Benutzer durch die Belegungsfunktion für reservierten Speicherplatz eine Option zum Einstellen des Wertes für die Schwellenwertfunktion und/oder für das Verhältnis zwischen dem nach einem durchgeführten Löschvorgang freigegebenen Speicherplatz und der Größe des computerlesbaren Mediums zur Verfügung gestellt wird.

## Revendications

1. Procédé de purge de données d'un dispositif de stockage de masse pour effacer de grandes quantités de données en détruisant les données électroniques des ressources informatiques, ordinateurs, serveurs, environnements de stockage de données, dispositifs de stockage réseau, supports amovibles d'enregistrement de données et/ou dispositifs similaires, par lequel la purge des données est réalisée sur la base d'un logiciel effaçant les données en présence sur un support informatique lisible tel qu'un disque dur, un lecteur de bande magnétique, un disque magnéto-optique, un disque optique, une carte mémoire, un disque SSD et/ou un support numérique similaire, où un processus de nettoyage d'espace libre, en vue de la réécriture de la totalité de l'espace d'un disque non attribué par fichiers, est exploité par réécriture de l'espace libre de disque non attribué sur le support informatique lisible avec des données temporaires, par lequel tout l'espace sale du disque sur le support informatique lisible est rempli conformément à un schéma de purge en attribuant temporairement l'espace libre du disque et en le réécrivant, après quoi l'espace sale du disque est effacé par suppression des données temporaires qui s'y trouvent, d'où il résulte que le disque a le même volume d'espace libre qu'avant, et où dans la purge de données du support informatique lisible, plusieurs fichiers temporaires (FO-Fi) sont créés qui occupent tout l'espace sale du disque, après quoi un modèle de purge et/ou des données aléatoires sont créées aux fichiers temporaires afin de réécrire tout l'espace sale du disque et effacer ainsi toutes les données qu'il contenait auparavant, **caractérisé par le fait que** dans la purge des supports informatiques lisibles, un logiciel de purge de données par la réécriture de données pour détruire toutes les données électroniques présentes sur un espace de disque libre et non attribué est utilisé avec une fonction de réserve d'espace, au moyen duquel une partie seulement (FO-Fx) des fichiers temporaires (FO-Fi) est effacée et sauvegardée en tant qu'espace libre purgé, où les fichiers temporaires restant (Fx-Fi) sont conservés dans un espace purgé et réservé sous la gestion de la fonction résidentielle d'espace réservé du logiciel de purge de données, où l'espace purgé et réservé est toujours considéré comme attribué et ne sera pas utilisé, et où les tailles de l'espace libre purgé et de l'espace purgé et réservé sont maintenues comme souhaité, à l'aide d'une fonction de seuil limite du logiciel de purge de données afin de gérer la taille de l'espace de disque restant libre après la procédure de purge, pour utilisation sous le contrôle de la fonction résidentielle d'espace réservé, ce qui permet de garantir que le support informatique lisible n'a pas moins d'espace libre que la valeur préréglée par la fonction de seuil limite.

2. Le procédé décrit dans la revendication 1, où, si la fonction d'espace réservé est activée et si une valeur de seuil limite est préréglée, après une procédure de purge réussie, le volume de l'espace libre est automatiquement réglé par la fonction résidentielle d'espace réservé du logiciel de purge de données pour être égal à la valeur de seuil limite et le reste de l'espace nouvellement purgé est ajouté à l'espace purgé et réservé, qui est conservé en état propre.

3. Le procédé décrit dans la revendication 1 ou 2, où, si une technique de répartition d'usure est utilisée dans le support informatique lisible, après une procédure consécutive de purge et lorsqu'une nouvelle portion de l'espace purgé et réservé y a été ajoutée, une ancienne portion de l'espace purgé et réservé est libérée pour garder toutes les parties du support informatique lisible en usage afin d'éviter de continuellement utiliser et réserver les mêmes secteurs du disque.

4. Le procédé décrit dans la revendication 3, où en purgeant un disque SSD, un grand fichier est attribué par le logiciel de purge de données afin qu'il occupe un espace suffisamment grand de l'espace libre sur le disque SSD en tant que fichier d'espace réservé, où, lorsque l'utilisateur efface un fichier sur le disque SSD, tout l'espace libre laissé après le création du fichier d'espace réservé est purgé par la fonction résidentielle d'espace réservé, le contenu du fichier qui vient d'être supprimé étant effacé, après quoi la localisation du fichier d'espace réservé sur le disque SSD est modifiée par le logiciel de purge de données, et une prochaine fois, lorsqu'un autre fichier sera supprimé, une autre portion de l'espace libre sera purgée afin de ne pas nuire à la fonction de répartition d'usure du disque SSD grâce au fait que dans chaque procédure de purge, différentes portions du disque sont effacées.

5. Le procédé décrit dans une quelconque des revendications 1 à 4, où, dans une automatisation de la gestion de l'espace du disque, le volume d'espace libre sur le disque où la fonction « espace réservé » est activée est continuellement surveillé par une fonction d'arrière-plan du logiciel de purge de données, où, si le système ou une application attribue un nouvel espace de disque de sorte que l'espace libre effectif devienne inférieur à la valeur de seuil limite préréglée, la taille de l'espace libre est automatiquement augmentée jusqu'au seuil limite par réduction de l'espace attribué à l'espace purgé et réservé et, si l'espace purgé et réservé devient vide, la surveillance de l'espace libre par le logiciel de purge de données est interrompue.

6. Le procédé décrit dans la revendication 5, où un rappel et/ou une indication de la pollution de l'espace de disque sont générés par la fonction en arrière-plan si le volume de l'espace libéré après la procédure de purge devient plus grand qu'une proportion préréglée du volume du support informatique lisible, afin de fournir à l'utilisateur une recommandation de nettoyage du disque ou quelque chose de similaire.

7. Le procédé décrit dans les revendication 1, 2, 5 ou 6, où une option pour régler la valeur du seuil limite et/ou la proportion d'espace libéré après une procédure de purge par rapport au volume du support informatique lisible est fournie à l'utilisateur par le fonction résidentielle d'espace réservé.
